# FASCICULE DE BREVET EUROPEEN

(11) **EP 3 576 924 B1**
(45) Date de publication et mention de la délivrance du brevet: **04.11.2020**
(21) Numéro de dépôt: 18705441.6
(22) Date de dépôt: 31.01.2018
(51) Int. Cl.: B29C 44/56, B60R 5/04, B29C 44/12

(54) **PANNEAU D'HABILLAGE POUR UN VEHICULE AUTOMOBILE**
VERKLEIDUNGSPLATTE FÜR EIN KRAFTFAHRZEUG
TRIM PANEL FOR A MOTOR VEHICLE

(30) Priorité: 31.01.2017 FR 1750776
(43) Date de publication de la demande: 11.12.2019
(73) Titulaire: TREVES Products, Services & Innovation, 75008 Paris (FR)
(72) Inventeur: GILLET, Christophe, 51100 Reims (FR); HERAT, Jérôme, 51100 Reims (FR); BRILLON, Eric, 51100 Reims (FR); ELLIS, Anthony, 51100 Reims (FR)
(74) Mandataire: Sayettat, Julien Christian
(86) Numéro de dépôt international: PCT/FR2018/050219
(87) Numéro de publication internationale: WO 2018/142062

(56) Documents cités:
- EP-A1- 2 974 911
- FR-A1- 3 010 687
- FR-A1- 3 037 883

## Description

L'invention concerne un panneau d'habillage pour un véhicule automobile et un procédé de réalisation d'un tel panneau.

Il est connu de réaliser un panneau d'habillage pour un véhicule automobile, ledit panneau comprenant une âme structurelle moulée, ledit panneau présentant en outre les caractéristiques suivantes :
- ladite âme présente en vue de haut deux bords se raccordant l'un à l'autre selon un raccord,
- ledit raccord est convexe et rayonné de sorte que lesdits bords se raccordent l'un à l'autre de façon progressive,
- ladite âme présente une face d'envers et une face d'endroit, ladite face d'endroit étant revêtue d'un revêtement d'endroit collé, ledit revêtement présentant une bordure périphérique repliée contre la périphérie de ladite face d'envers.

Lorsqu'il est dit que le raccord est rayonné, on entend qu'il n'est pas en angle vif mais est arrondi de manière à éviter toute arête vive nuisible à une bonne finition dans ledit raccord.

En effet, le fait de rayonner le raccord permet de minimiser, au niveau dudit raccord, la formation de plis qui génèrent des surépaisseurs de revêtement d'endroit en périphérie de la face d'envers.

Cependant, des plis résiduels subsistent, ce qui est préjudiciable à une finition périphérique optimale dans le raccord. Le document FR3037883A1 montre un panneau d'habillage selon le préambule de la revendication 1.

L'invention a pour but de proposer un agencement permettant de réaliser une finition périphérique optimale dans le raccord, ceci malgré la présence de tels plis résiduels.

A cet effet, l'invention propose un panneau d'habillage pour un véhicule automobile, ledit panneau comprenant une âme structurelle moulée, ledit panneau présentant en outre les caractéristiques suivantes :
- ladite âme présente en vue de haut deux bords se raccordant l'un à l'autre selon un raccord,
- ledit raccord est convexe et rayonné de sorte que lesdits bords se raccordent l'un à l'autre de façon progressive,
- ladite âme présente une face d'envers et une face d'endroit, ladite face d'endroit étant revêtue d'un revêtement d'endroit collé, ledit revêtement présentant une bordure périphérique repliée contre la périphérie de ladite face d'envers,
- ladite face d'envers est pourvue à proximité dudit raccord d'une pluralité de gorges sensiblement rectilignes disposées en éventail,
- lesdites gorges reçoivent, collés dedans, les plis formés dans ladite bordure à proximité dudit raccord.

Avec l'agencement proposé, on obtient une finition périphérique particulièrement esthétique et robuste, au niveau du raccord du panneau, dans lequel les plis formés dans la bordure du revêtement d'endroit à proximité dudit raccord sont reçus dans les gorges.

D'autres particularités et avantages de l'invention apparaîtront dans la description qui suit, faite en référence aux figures jointes, dans lesquelles :

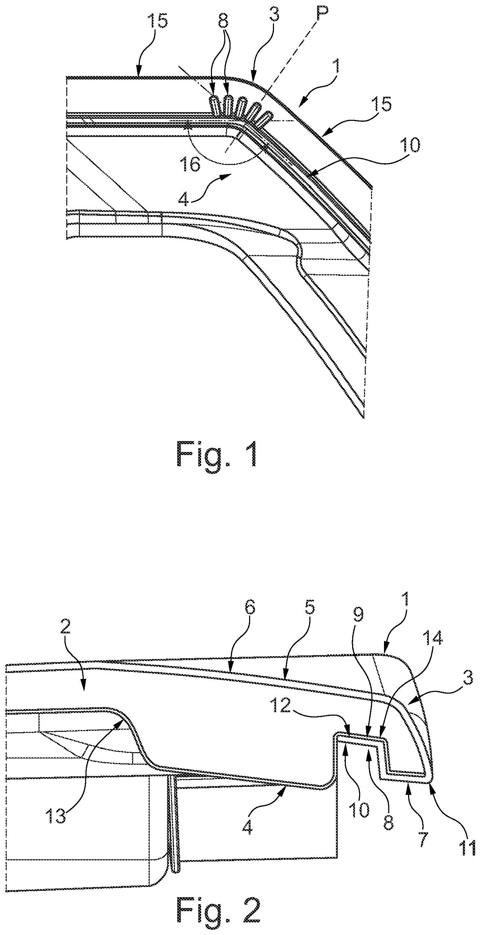

- la figure 1 est une vue schématique partielle de face d'un panneau selon une réalisation,
- la figure 2 est une vue schématique en coupe partielle du panneau représenté en figure 1 selon un plan P.

En référence aux figures, on décrit un panneau 1 d'habillage pour un véhicule automobile, par exemple sous forme de tablette de recouvrement d'un compartiment à bagages, ledit panneau comprenant une âme 2 structurelle moulée, par exemple à base de mousse de polyuréthanne rigide ou semi-rigide, ledit panneau présentant en outre les caractéristiques suivantes :
- ladite âme présente en vue de haut deux bords 15 se raccordant l'un à l'autre selon un raccord 3,
- ledit raccord est convexe et rayonné de sorte que lesdits bords se raccordent l'un à l'autre de façon progressive,
- ladite âme présente une face d'envers 4 et une face d'endroit 5, ladite face d'endroit étant revêtue d'un revêtement d'endroit 6 collé, par exemple à base de moquette, ledit revêtement présentant une bordure périphérique 7 repliée contre la périphérie de ladite face d'envers,
ledit panneau présentant en outre les caractéristiques suivantes :
- ladite face d'envers est pourvue à proximité dudit raccord d'une pluralité de gorges 8 sensiblement rectilignes disposées en éventail,
- lesdites gorges reçoivent, collés dedans, les plis 9 formés dans ladite bordure à proximité dudit raccord.

En particulier, le panneau 1 peut comprendre une pluralité de raccords 3 à proximité desquels la face d'envers 4 est pourvue d'une pluralité de gorges 8 sensiblement rectilignes disposées en éventail, lesdites gorges recevant, collés dedans, les plis 9 formés dans la bordure 7 à proximité desdits raccords.

Selon la réalisation représentée, le raccord 3 est rayonné sensiblement selon un arc de cercle, les gorges 8 s'étendant sensiblement selon des rayons dudit cercle.

Selon une réalisation, le rayon présente une valeur comprise entre 5 et 20 mm.

Selon la réalisation représentée, la face d'envers 4 est pourvue d'une tranchée périphérique 10 s'étendant le long et à distance du bord de ladite face, une partie 12 de la bordure 7 étant insérée dans ladite tranchée de manière à être masquée.

Selon la réalisation représentée, les gorges 8 débouchent dans la tranchée 10, de manière à faciliter l'introduction de la bordure 7 dans ladite tranchée.

Selon la réalisation représentée, les gorges 8 présentent une profondeur analogue à celle de la tranchée 10.

Selon la réalisation représentée, le panneau 1 comprend en outre un revêtement d'envers 13 - par exemple à base de non tissé - collé sur la face d'envers 4, la bordure périphérique 14 dudit revêtement étant insérée dans la tranchée 10.

Selon la réalisation représentée, la bordure 14 s'étend en outre dans les gorges 8.

Selon la réalisation représentée, la bordure 14 s'étend en outre au-delà des gorges 8 jusque au bord 11 de la face d'envers 4.

Selon une réalisation, le collage du revêtement d'endroit 6 et/ou d'envers 13 est réalisé par l'intermédiaire d'un film fusible, par exemple de type co-polyamide.

Selon la réalisation représentée, la face d'envers d'un des revêtements 6,13 - ici le revêtement d'endroit 6 - vient en recouvrement de la face d'endroit de l'autre des revêtements 13,6 - ici le revêtement d'envers 13 - dans la tranchée 10.

Selon une réalisation, la largeur de l'ouverture de la tranchée 10 est comprise entre 3 et 10 mm.

Selon une réalisation, la profondeur de la tranchée 10 est comprise entre 5 et 15 mm.

## Revendications

1. Panneau (1) d'habillage pour un véhicule automobile, ledit panneau comprenant une âme (2) structurelle moulée, ledit panneau présentant en outre les caractéristiques suivantes :
• ladite âme présente en vue de haut deux bords (15) se raccordant l'un à l'autre selon un raccord (3),
• ledit raccord est convexe et rayonné de sorte que lesdits bords se raccordent l'un à l'autre de façon progressive,
• ladite âme présente une face d'envers (4) et une face d'endroit (5), ladite face d'endroit étant revêtue d'un revêtement d'endroit (6) collé, ledit revêtement présentant une bordure (7) périphérique repliée contre la périphérie de ladite face d'envers,
ledit panneau étant **caractérisé en ce que** :
• ladite face d'envers est pourvue à proximité dudit raccord d'une pluralité de gorges (8) sensiblement rectilignes disposées en éventail,
• lesdites gorges reçoivent, collés dedans, les plis (9) formés dans ladite bordure à proximité dudit raccord.

2. Panneau selon la revendication 1, **caractérisé en ce que** le raccord (3) est rayonné sensiblement selon un arc de cercle, les gorges (8) s'étendant sensiblement selon des rayons dudit cercle.

3. Panneau selon l'une des revendications 1 ou 2, **caractérisé en ce que** la face d'envers (4) est pourvue d'une tranchée (10) périphérique s'étendant le long et à distance du bord (11) de ladite face, une partie (12) de la bordure (7) étant insérée dans ladite tranchée de manière à être masquée.

4. Panneau selon la revendication 3, **caractérisé en ce que** les gorges (8) débouchent dans la tranchée (10).

5. Panneau selon la revendication 4, **caractérisé en ce que** les gorges (8) présentent une profondeur analogue à celle de la tranchée (10).

6. Panneau selon l'une quelconque des revendications 3 à 5, **caractérisé en ce qu'**il comprend en outre un revêtement d'envers (13) collé sur la face d'envers (4), la bordure périphérique (14) dudit revêtement étant insérée dans la tranchée (10).

7. Panneau selon la revendication 6, **caractérisé en ce que** la bordure (14) s'étend en outre dans les gorges (8).

8. Panneau selon la revendication 7, **caractérisé en ce que** la bordure (14) s'étend en outre au-delà des gorges (8) jusque au bord (11) de la face d'envers (4).

9. Panneau selon l'une quelconque des revendications 6 à 8, caractérisé en ce la face d'envers d'un des revêtements (6,13) vient en recouvrement de la face d'endroit de l'autre des revêtements (13,6) dans la tranchée (10).

## Patentansprüche

1. Verkleidungsplatte (1) für ein Kraftfahrzeug, wobei die Platte einen gegossenen Strukturkern (2) umfasst, wobei die Platte weiter die folgenden Merkmale aufweist:
• der Kern weist in der Draufsicht zwei Ränder (15) auf, die entsprechend einem Verbindungsstück (3) miteinander verbunden sind,
• das Verbindungsstück ist konvex und mit einem solchen Radius versehen, dass sich die Ränder progressiv miteinander verbinden,
• der Kern weist eine Rückseite (4) und eine Vorderseite (5) auf, wobei die Vorderseite mit einer verklebten Vorderseitenverkleidung (6) verkleidet ist, wobei die Verkleidung eine umfängliche Einfassung (7) aufweist, die gegen den Umfang der Rückseite gefaltet ist,
wobei die Platte **dadurch gekennzeichnet ist, dass**:
• die Rückseite in der Nähe der Verbindung mit einer Vielzahl von im Wesentlichen geradlinigen Ausnehmungen (8) versehen ist, die fächerförmig angeordnet sind,
• die Ausnehmungen darin verklebt die Falten (9), die in der Einfassung in der Nähe der Verbindung gebildet werden, aufnehmen.

2. Platte nach Anspruch 1, **dadurch gekennzeichnet, dass** die Verbindung (3) mit einem Radius im Wesentlichen in Kreisbogenform versehen ist, wobei sich die Ausnehmungen (8) im Wesentlichen entlang der Radien des Kreises erstrecken.

3. Platte nach einem der Ansprüche 1 oder 2, **dadurch gekennzeichnet, dass** die Rückseite (4) mit einem umfänglichen Graben (10) versehen ist, der sich entlang, und auf Abstand zum Rand (11) der Seite erstreckt, wobei ein Teil (12) der Einfassung (7) in den Graben eingeführt ist, um verborgen zu sein.

4. Platte nach Anspruch 3, **dadurch gekennzeichnet, dass** die Ausnehmungen (8) in den Graben (10) münden.

5. Platte nach Anspruch 4, **dadurch gekennzeichnet, dass** die Ausnehmungen (8) eine Tiefe entsprechend jener des Grabens (10) aufweisen.

6. Platte nach einem der Ansprüche 3 bis 5, **dadurch gekennzeichnet, dass** sie weiter eine an der Rückseite (4) verklebte Rückverkleidung (13) umfasst, wobei die umfängliche Einfassung (14) der Verkleidung in den Graben (10) eingeführt ist.

7. Platte nach Anspruch 6, **dadurch gekennzeichnet, dass** sich die Einfassung (14) weiter in den Ausnehmungen (8) erstreckt.

8. Platte nach Anspruch 7, **dadurch gekennzeichnet, dass** sich die Einfassung (14) weiter über die Ausnehmungen (8) hinweg bis zum Rand (11) der Rückseite (4) erstreckt.

9. Platte nach einem der Ansprüche 6 bis 8, **dadurch gekennzeichnet, dass** die Rückseite einer der Verkleidungen (6, 13) als Überdeckung der Vorderseite der anderen der Verkleidungen (13, 6) in den Graben (10) führt.

## Claims

1. Trim panel (1) for a motor vehicle, said panel comprising a moulded structural core (2), said panel further having the following features:
- said core has, as seen from above, two edges (15) connected to each other along a joint (3),
- said joint is convex and radiated such that said edges are connected to each other gradually,
- said core has a back face (4) and a front face (5), said front face being coated with a glued front coating (6), said coating having a peripheral edging (7) folded against the periphery of said back face,
said panel being **characterized in that**:
- said back face is provided, in the vicinity of said joint, with a plurality of substantially straight grooves (8) arranged in a fan,
- said grooves receive, glued therein, the folds (9) formed in said edging in the vicinity of said joint.

2. Panel according to claim 1, **characterized in that** the joint (3) is radiated substantially in an arc of circle, the grooves (8) extending substantially along radii of said circle.

3. Panel according to one of claims 1 or 2, **characterized in that** the back face (4) is provided with a peripheral slot (10) extending along and at a distance from the edge (11) of said face, a portion (12) of the edging (7) being inserted into said slot so as to be hidden.

4. Panel according to claim 3, **characterized in that** the grooves (8) open into the slot (10).

5. Panel according to claim 4, **characterized in that** the grooves (8) have a depth equivalent to that of the slot (10) .

6. Panel according to any one of claims 3 to 5, **characterized in that** it also includes a back coating (13) glued on the back face (4), the peripheral edging (14) of said coating being inserted into the slot (10).

7. Panel according to claim 6, **characterized in that** the edging (14) also extends into the grooves (8).

8. Panel according to claim 7, **characterized in that** the edging (14) also extends beyond the grooves (8) to the edge (11) of the back face (4).

9. Panel according to any one of claims 6 to 8, **characterized in that** the back face of one of the coatings (6, 13) overlaps the front face of the other of the coatings (13, 6) in the slot (10).
